# EUROPEAN PATENT SPECIFICATION

(11) **EP 4 386 955 B1**
(45) Date of publication and mention of the grant of the patent: **28.10.2026**
(21) Application number: 23756608.8
(22) Date of filing: 14.02.2023
(51) Int. Cl.: H01M 50/242, H01M 50/291, H01M 50/289, H01M 50/569, H01M 50/593, H01M 50/211, H01M 10/04

(54) **BATTERY PACK AND DEVICE INCLUDING SAME**
BATTERIEPACK UND VORRICHTUNG DAMIT
BLOC-BATTERIE ET DISPOSITIF LE COMPRENANT

(30) Priority: 18.02.2022 KR 20220021377; 13.02.2023 KR 20230018548
(43) Date of publication of application: 19.06.2024
(73) Proprietor: LG Energy Solution, Ltd., Seoul 07335 (KR)
(72) Inventor: KIM, Dongwook, Daejeon 34122 (KR); KIM, Jae Yeong, Daejeon 34122 (KR)
(74) Representative: Goddar, Heinz J.
(86) International application number: PCT/KR2023/002163
(87) International publication number: WO 2023/158196

(56) References cited:
- EP-A1- 3 573 129
- EP-A1- 3 886 202
- KR-A- 20110 057 848
- KR-A- 20190 069 873
- KR-A- 20190 090 992
- KR-A- 20210 144 344
- KR-A- 20220 011 967
- US-A1- 2020 168 959

## Description

### [TECHNICAL FIELD]

The present disclosure relates to a battery pack and a device including the same, and more particularly, to a battery pack that can control the swelling of battery cells and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which seals and accommodates the electrode assembly together with an electrolyte solution.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior part.

Recently, secondary batteries are widely used not only for small-sized devices such as cellular phones but also middle-sized or large-sized devices such as vehicles and energy storage systems. For the purpose of applying to such middle-sized or large-sized devices, a great number of secondary batteries may be electrically connected to enhance capacity and output. Pouch-type secondary batteries tends to be more widely used due to advantages such as being easily stacked and having a light weight.

A pouch-type secondary battery may be generally manufactured through a process of injecting an electrolyte solution in a state in which an electrode assembly is accommodated in a pouch exterior part, and sealing the pouch exterior part.

A secondary battery may generate gas inside due to deterioration or the like as charge/discharge is repeated. And, when gas is generated from the inside in this way, the internal pressure increases, which may cause a swelling phenomenon in which pressure resistance increases and at least a part of the exterior part swells. In particular, in the case of the pouch-type secondary batteries, the structural stiffness of the exterior part is weaker than that of the can-type secondary battery, so that the swelling phenomenon may occur more severely.

Conventionally, battery cells are accommodated in a module case, and foam-shaped pads are arranged, so that the module case does not restrict the battery cells excessively, and the pad absorbs the swelling of battery cells.

When the swelling phenomenon of the battery cells occurs to a large extent, the pressure inside the battery increases and the volume increases, which may adversely affect the structural stability of the battery module. Moreover, a battery module often includes a plurality of secondary batteries. In particular, in the case of middle-sized or large-sized battery modules used in automobiles, energy storage systems (ESS), etc., a large number of secondary batteries can be included and interconnected for high output or high capacity. At this time, even if the volume of each secondary battery increases little by little due to swelling, the volume change of each secondary battery is accumulated to the battery module as a whole, and the degree of deformation may reach a serious level. In particular, the module frame accommodating a plurality of secondary batteries may be deformed, or the welded portion of the module frame may be broken. That is, the volume expansion phenomenon due to the swelling of each secondary battery may reduce the overall structural stability of the battery module. In addition, when the swelling force greatly increases while charge/discharge is repeated, the separator in the battery cell may be compressed, thereby partially degrading battery performance.

Therefore, there is a need to develop a method capable of absorbing the expansion displacement during swelling of the battery cell and applying an appropriate pressing force to the battery cell.

The document EP 3 573 129 A1 discloses a battery pack having an I-beam frame with an inserted hollow heatsink.

The document EP 3 886 202 A1 discloses a battery pack having a stacked cell assembly confined between end plates and incorporating fluid-filled spring elements with a pressure-adjusting unit.

The document US 2020/168 959 A1 discloses a battery module housing equipped with pressure-management components.

### [DETAILED DESCRIPTION OF THE INVENTION]

### [Technical Problem]

It is an object of the present disclosure to provide a battery pack capable of absorbing expansion displacement due to swelling of the battery cell and applying an appropriate pressing force to the battery cell so that the battery cells can exhibit optimal performance, and a device including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a battery module including a battery cell stack in which a plurality of battery cells are stacked in one direction; a pack housing that accommodates the battery module therein; a cross beam arranged on the bottom of the pack housing; and a tube arranged inside the cross beam, wherein the cross beam is located on one side surface of a stacking direction of the battery cells with respect to the battery module, and has a form extending along a direction perpendicular to the stacking direction of the battery cells, and wherein a fluid flows into the inside of the tube.

The battery cells may be stacked along one direction while standing vertically on one surface of the bottom of the pack housing in the battery module.

The cross beam comprises a frame part including a first side surface part, a second side surface part, and a ceiling part.

The cross beam may be arranged such that one surface of the first side surface part and one surface of the second side surface part are parallel to both side surfaces of the battery module in a direction in which the battery cells are stacked.

An opening is formed on at least one of the first side surface part or the second side surface part, and the tube is exposed through the opening to make contact with the battery module.

The tube into which the fluid flows presses the battery module along the stacking direction of the battery cells.

The battery pack may further comprise a fluid supply device that is connected to the tube and supplies the fluid to the tube.

The battery pack may further comprise a fluid control valve that connects the tube and the fluid supply device and controls the amount of the fluid that flows into the tube.

The battery pack may further comprise a pressure sensor that is connected to the tube and measures the pressure of the tube.

The cross beam may comprise a frame part including a first side surface part, a second side surface part, and a ceiling part, and the first side surface part, the second side surface part, and the ceiling part may form an n-shape in a cross section of the frame part.

The fluid control valve may be located in a space surrounded by the first side surface part, the second side surface part and the ceiling part.

The tube may be arranged in an n-shape within the n-shaped frame part.

The tube may be a soft or elastic material, and the fluid flowing into the tube may be in a liquid or gel state.

The battery module may further comprise a module frame that accommodates the battery cell stack therein, and the battery cells may be stacked along one direction from the side surface part of the module frame to the other side surface part. A compression pad may be interposed at least at one place between adjacent battery cells or between the outermost battery cell and the side surface part of the module frame. In an EOL (End of Life) state, a deformation ratio in the direction in which the battery cells are stacked is 12% or less, and a surface pressure applied to the battery cells may be 0.9 MPa or less.

A module stiffness curve of the battery module may be calculated in a slope (MPa/%) range of 0.00417 or more and 0.225 or less, and the module stiffness curve of the battery module may correspond to a relationship between the deformation ratio of the module frame and the surface pressure applied to the module frame.

A module stiffness curve of the battery module may be derived by reflecting the degree of compression of the compression pads relative to the surface pressure applied to the compression pads and the number of the compression pads, on the frame stiffness curve of the module frame.

According to another embodiment of the present disclosure, there is provided a device comprising the above-mentioned battery pack.

### [Advantageous Effects]

According to the embodiments of the present disclosure, in the battery pack in which the battery module is accommodated in the pack housing, a tube into which fluid flows is provided inside the cross beam arranged adjacent to the battery module, so that expansion displacement due to swelling of the battery cell can be effectively absorbed, and an appropriate pressure that enables battery cells to exhibit optimal performance can be applied.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view showing a battery pack according to an embodiment of the present disclosure;
FIG. 2 is a perspective view showing a battery module included in the battery pack of FIG. 1;
FIG. 3 is an exploded perspective view of the battery module of FIG. 2;
FIG. 4 is a plan view showing one of the battery cells included in the battery module of FIG. 3;
FIG. 5 is a perspective view showing components of the battery pack of FIG. 1 excluding a battery module;
FIG. 6 is a perspective view showing a cross beam included in the battery pack of FIG. 1;
FIG. 7 is a plan view which schematically shows a battery pack according to an embodiment of the present disclosure;
FIG. 8 is a cross-sectional view showing a cross section taken along the cutting line A-A' of FIG. 6;
FIG. 9 is a cross-sectional view showing a cross section taken along the cutting line B-B' of FIG. 6;
FIG. 10 is an exploded perspective view showing a battery module according to another embodiment of the present disclosure;
FIG. 11 is a perspective view of a battery module according to an embodiment of the present disclosure;
FIG. 12 is an exploded perspective view of the battery module of FIG. 11;
FIG. 13 is a plan view showing any one of the battery cells included in the battery module of FIG. 12;
FIG. 14 is a cross-sectional view taken along the cutting line A-A' of FIG. 11;
FIGS. 15 to 17 are graphs showing module stiffness curves of battery modules and P-D curves of battery cell stacks according to an embodiment of the present disclosure;
FIG. 18 is a graph showing the range of a module stiffness curve of a battery module according to an embodiment of the present disclosure;
FIG. 19 is a graph showing a P-D curve for a single battery cell;
FIG. 20 is a graph showing a P-D curve of a single battery cell and a P-D curve of a battery cell stack; and
FIG. 21 is a graph showing module stiffness curves of Examples 1 to 4 according to the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

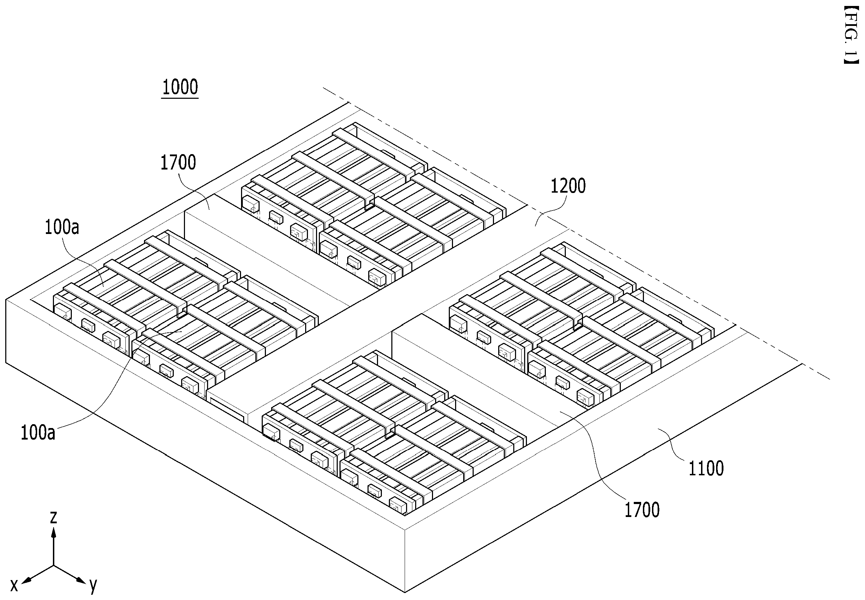

FIG. 1 is a perspective view showing a battery pack according to an embodiment of the present disclosure.

Referring to FIG. 1, the battery pack 1000 according to an embodiment of the present disclosure includes a battery module 100a, a pack housing 1100 that accommodates the battery module 100a therein, and a cross beam 1200 arranged on the bottom of the pack housing 1100. The pack housing 1100 may accommodate one or a plurality of battery modules 100a therein. FIG. 1 shows a form in which a plurality of battery modules 100a are accommodated.

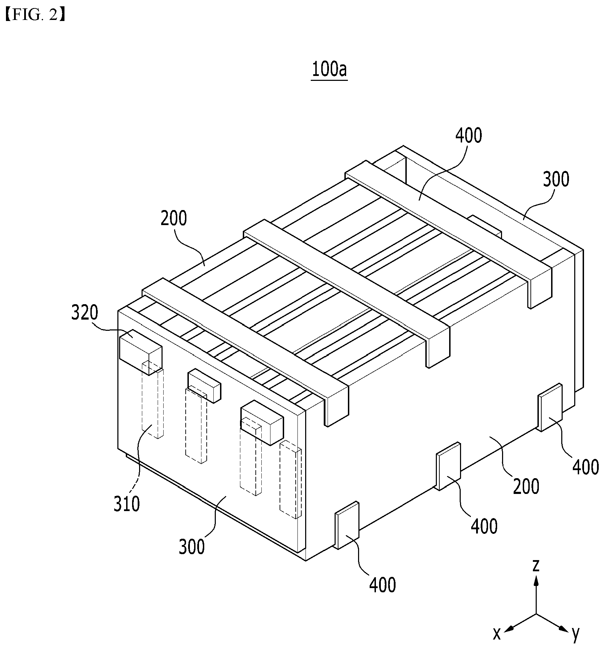

First, referring to FIGS. 2 to 4, the battery module 100a included in the battery pack 1000 according to the present embodiment will be described in detail.

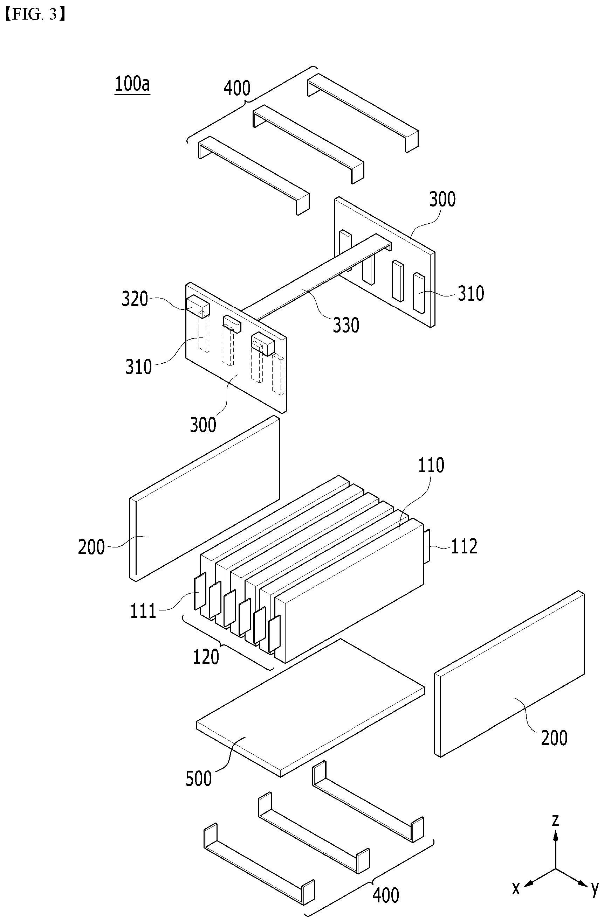

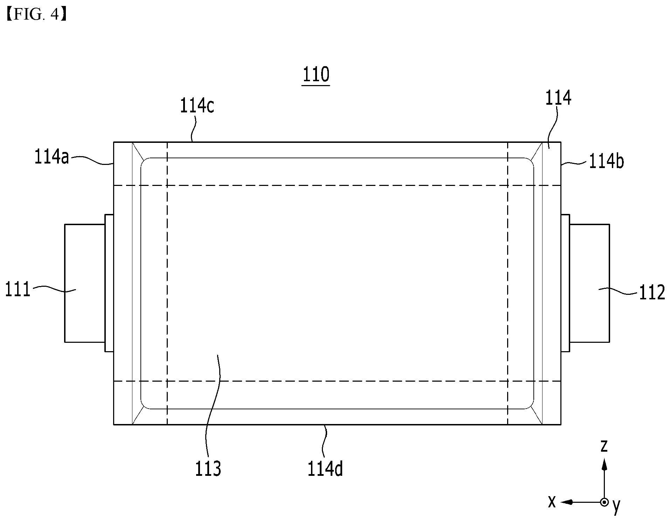

FIG. 2 is a perspective view showing a battery module included in the battery pack of FIG. 1. FIG. 3 is an exploded perspective view of the battery module of FIG. 2. FIG. 4 is a plan view showing one of the battery cells included in the battery module of FIG. 3.

Referring to FIGS. 2 to 4, the battery module 100a according to the present embodiment includes a battery cell stack 120 in which a plurality of battery cells 110 are stacked in one direction. The battery cell 110 may be a pouch-type battery cell. The pouch-type battery cell can be formed by accommodating an electrode assembly in a pouch case of a laminate sheet including a resin layer and a metal layer, and then adhering the outer peripheral part of the pouch case.

Specifically, the battery cell 110 may have a structure in which two electrode leads 111 and 112 face each other and protrude from one end 114a and the other end 114b of the cell main body 113, respectively. The battery cell 110 can be produced by joining both ends 114a and 114b of a cell case 114 and one side part 114c connecting them in a state in which an electrode assembly (not shown) is accommodated in a cell case 114. In other words, the battery cell 110 according to the present embodiment has a total of three sealing parts, the sealing parts have a structure that is sealed by a method such as fusion, and the remaining other one side part 114d may be composed of a folding part. The battery cell 110 according to the present embodiment may be a pouch-type battery cell configured to accommodate an electrode assembly inside the cell case 114 and seal the outer periphery side of the cell case 114. The battery cell 110 described above is an illustrative structure, and it goes without saying that a unidirectional battery cell in which the two electrode leads protrude in the same direction can be used.

The pouch-type battery cell 110 may have a sheet shape, and such battery cells 110 are stacked along one direction to form a battery cell stack 120. As an example, the battery cells 110 may be stacked along a direction parallel to the y-axis while facing surfaces of the battery body 113.

The battery module 100a may further include a pair of side plates 200, a pair of busbar frames 300, and band members 400.

A pair of side plates 200 may be arranged on both side surfaces of the battery cell stack 120 so as to support the battery cell stack 120. Specifically, in the battery cell stack 120, the side plates 200 may be located on both side surfaces of the direction in which the battery cells 110 are stacked. As shown in FIG. 3, the battery cells 110 are stacked along a direction parallel to the y-axis, and the side plates 200 may be respectively arranged on both side surfaces of the battery cell stack 120 along the stacking direction of the battery cells 110.

A pair of busbar frames 300 may be located on one side and the other side of the battery cell stack 120, respectively. Specifically, the busbar frames 300 may be located on one side and the other side of the battery cell stack 120 in the direction in which the electrode leads 111 and 112 of the battery cells 110 protrude. As the battery cells 110 are stacked along the y-axis direction, the electrode leads 111 and 112 may protrude in the x-axis direction and the -x-axis direction, and the busbar frames 300 may be respectively located in the x-axis direction and the -x-axis direction with respect to the battery cell stack 120. Furthermore, such busbar frames 300 may be arranged so as to cover the battery cell stack 120.

The busbar 310 and the module connector 320 may be mounted on the busbar frame 300.

The busbar 310 may be electrically connected to the electrode leads 111 and 112 of the battery cells 110 while being mounted on the busbar frame 300. The busbars 310 may be provided in a plurality of numbers. The battery cells 110 can be electrically connected in series or in parallel via the busbars 310.

The module connector 320 may be electrically connected to an external device while being mounted on the busbar frame 300. As an example, the module connector 320 may be provided with a high voltage connector, a low voltage connector, or the like, and may be connected to an external BMS (battery management system) to transmit temperature and voltage information of the battery module 100a.

Meanwhile, a sensing PCB 330 connecting the pair of busbar frames 300 may be arranged. The sensing PCB 330 may be provided as a flexible printed circuit board. This sensing PCB 330 is provided with a predetermined length, and may be arranged on the upper side of the battery cell stack 120.

The band members 400 are connected to the pair of side plates 200, and can at least partially cover the upper side and the lower side of the battery cell stack 120. That is, the band members 400 may be located on the upper side and the lower side of the battery cell stack 120 to connect the pair of side plates 200. One end of the band member 400 is connected to one side plate 200, and the other end of the band member 400 may be connected to the other side plate 200. Such band members 400 may be provided with a metal member of an elastic material. The connection method between the band members 400 and the pair of side plates 200 is not particularly limited, but may be joined by welding as an example. In particular, both ends of the band member 400 may be bent and joined to the side plates 200.

On the upper side or the lower side of the battery cell stack 120, the band members 400 may be separately arranged at prescribed intervals along the longitudinal direction of the battery module 100a. Here, the longitudinal direction of the battery module 100a is a direction perpendicular to the direction in which the battery cells 110 are stacked, which corresponds to a direction parallel to the x-axis in the figure.

Meanwhile, the battery module 100a may further include a heat sink 500. The heat sink 500 is for cooling the battery cell stack 120, and may be arranged on the lower side of the battery cell stack 120. This heat sink 500 may be located on the bottom of a pack housing, which will described later.

Next, the pack housing 1100 and the cross beam 1200 according to the present embodiment will be described in detail with reference to FIGS. 1, 5 to 7, etc.

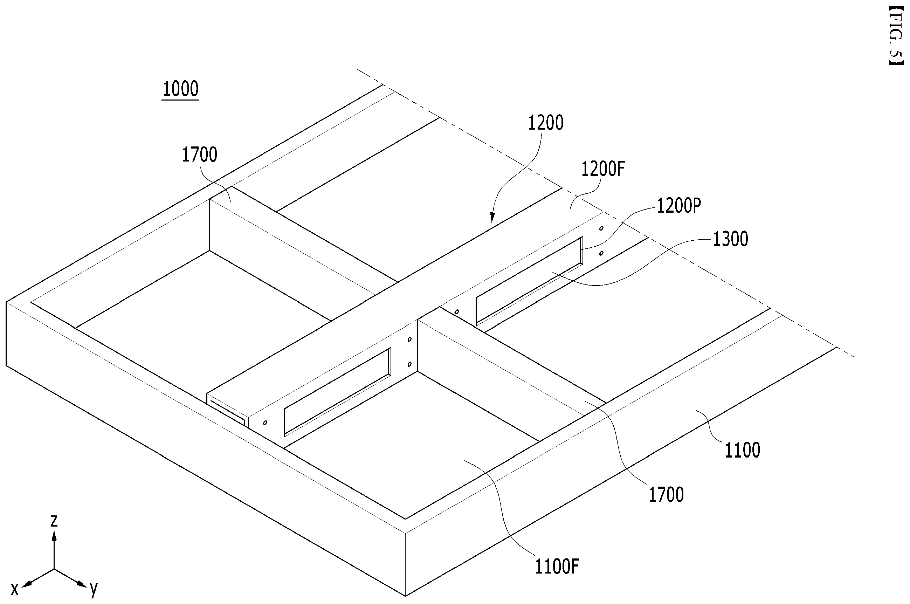

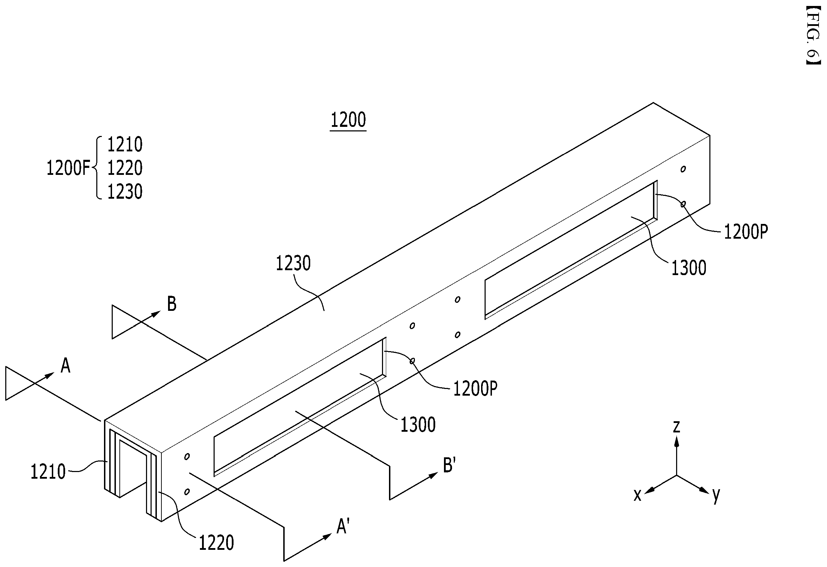

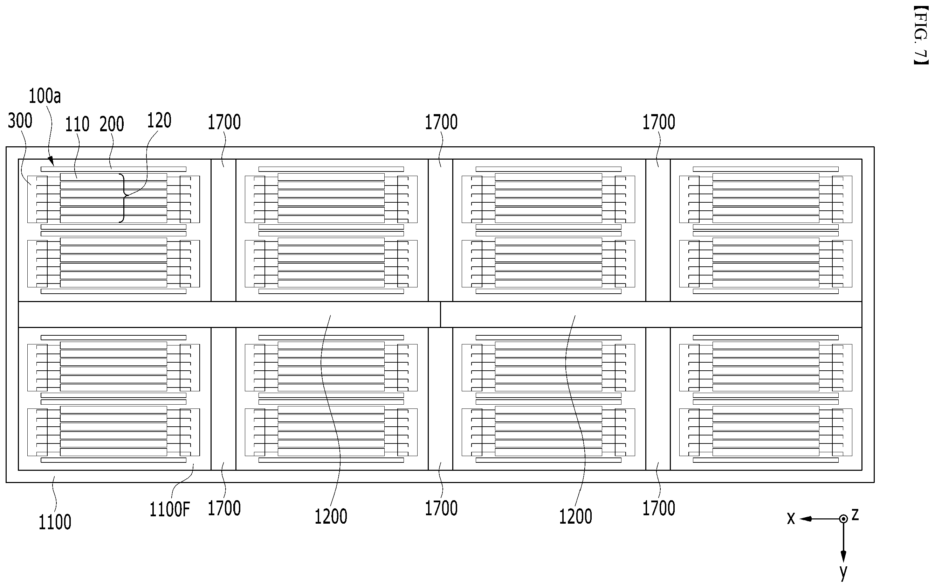

FIG. 5 is a perspective view showing components of the battery pack of FIG. 1 excluding a battery module. FIG. 6 is a perspective view showing a cross beam included in the battery pack of FIG. 1. FIG. 7 is a plan view which schematically shows a battery pack according to an embodiment of the present disclosure. In particular, FIG. 7 is a plan view which schematically shows a state in which the battery pack is viewed along the -z axis direction on the xy plane.

Referring to FIGS. 1, 5 to 7, the cross beam 1200 is arranged on the bottom 1100F of the pack housing 1100, is located on one side surface of the stacking direction of the battery cells 110 with respect to the battery module 100a, and has a shape that extends along a direction perpendicular to the stacking direction of the battery cells 110.

The pack housing 1100 is a structure that accommodates the battery module 100a therein, and may be, for example, in the form where the upper part is opened while having an internal storage space. The battery module 100a is arranged in the storage space, and although not specifically shown, a pack cover may be assembled on the opened upper part of the pack housing 1100.

As described above, the battery cells 110 are stacked along one direction in the battery module 100a, and the cross beam 1200 is located on one side surface of the stacking direction of the battery cells 110 with respect to the battery module 100a, and has a form that extends along a direction perpendicular to the stacking direction of the battery cells 110. More specifically, the battery cells 110 may be stacked along one direction while standing vertically on one surface of the bottom 1100F of the pack housing 1100 within the battery module 100a. Accordingly, one side surface of the cross beam 1200 may be located in parallel to one side surface of the battery body 113 (see FIG. 4) of the battery cell 110. As shown, the battery cells 110 are stacked along a direction parallel to the y-axis in a state perpendicular to one surface of the bottom 1100F of the pack housing 1100. The cross beam 1200 is located on one side surface of the y-axis direction or -y-axis direction with respect to any one battery module 100a. Further, the cross beam 1200 may have a form extending along a direction parallel to the x-axis. The cross beam 1200 as above is arranged so as to support the expansion force when the battery cells 110 expand due to swelling.

At this time, the battery pack 1000 according to the present embodiment includes a tube 1300 arranged inside the cross beam 1200, and fluid flows into the inside of the tube 1300. The tube 1300 may be made of a soft or elastic material. The tube 1300 may have a structure formed of a rubber material.

When the battery cell 110 is a pouch-type battery cell and has a sheet shape, the battery cells 110 mainly expand in the stacking direction during occurrence of swelling. That is, the expansion force is applied in a direction parallel to the y-axis in the figure. The cross beam 1200 located on one side surface of the battery module 100a in the stacking direction of the battery cells 110 may support the expansion force of the battery cells 110. In addition, the tube 1300 inside the cross beam 1200 may absorb expansion displacement of the battery cells 110. Thereby, the effect of dispersing pressure between the battery cells 110 may be enhanced.

Meanwhile, the fluid flowing into the tube 1300 may be in a liquid or gel state. For example, the fluid may be cooling water or water. Cooling water or water is filled in the tube, thereby capable of realizing a cooling effect for the battery cell. In addition, when the fluid is a hydrogel, this is advantageous for distributing stress concentrated in a specific region and maintaining thermal equilibrium. On the contrary, it is possible to assume that gas is used as a fluid, but when gas is used as the fluid, there may be a problem that the heated gas raises the temperature of the battery cell 110 as a whole.

The battery pack 1000 according to the present embodiment is configured such that a tube 1300 into which a fluid flows is provided inside, which can thus apply a constant force to the plurality of battery cells 110, and absorb the expansion displacement due to swelling of the battery cell. Since this is a control method using the fluid, the surface pressure of the battery cell 110 can be maintained constant even if swelling of the battery cell 110 occurs.

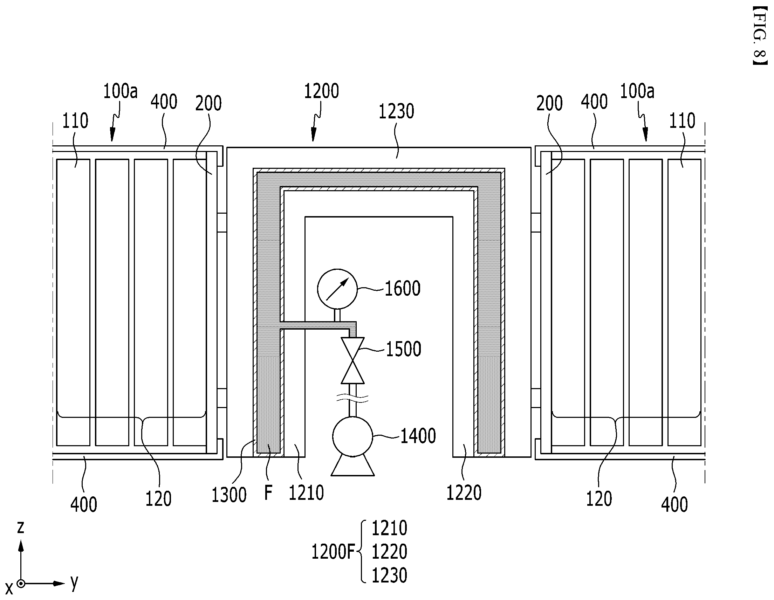

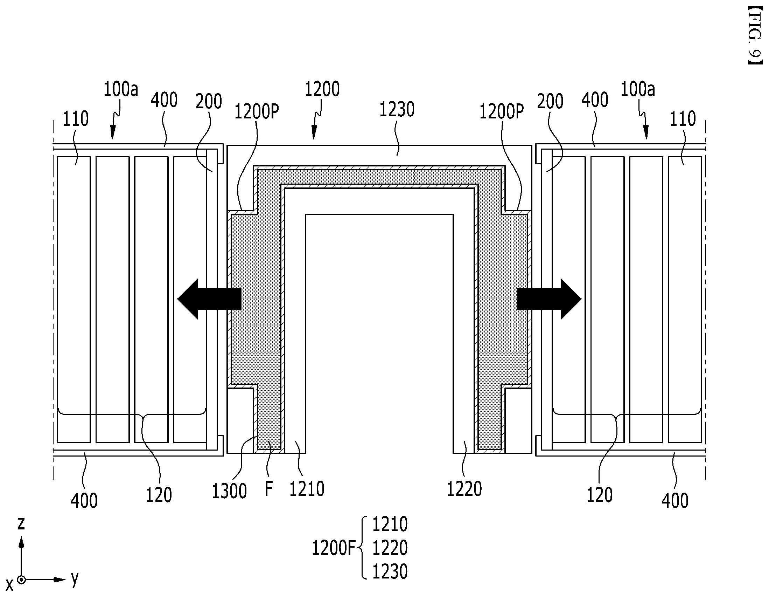

Next, the detailed structures of the cross beam and the tube according to the present embodiment will be described in detail with reference to FIGS. 8 and 9, etc.

FIG. 8 is a cross-sectional view showing a cross section taken along the cutting line A-A' of FIG. 6. FIG. 9 is a cross-sectional view showing a cross section taken along the cutting line B-B' of FIG. 6. FIGS. 8 and 9 are shown in a form in which battery module 100a is arranged near the cross beam 1200 for convenience of explanation.

Referring to FIGS. 5, 6, 8 and 9 together, the cross beam 1200 according to the present embodiment comprises a frame part 1200F including a first side surface part 1210, a second side surface part 1220, and a ceiling part 1230. The tube 1300 may be located inside the frame part 1200F.

The first side surface part 1210 and the second side surface part 1220 may be arranged perpendicular to one surface of the bottom 1100F of the pack housing 1100, and the ceiling part 1230 may connect the first side surface part 1210 and the second side surface part 1220.

At this time, the cross beam 1200 may be arranged such that one surface of the first side surface part 1210 and one surface of the second side surface part 1220 are parallel to both side surfaces of the battery module 100a in the direction in which the battery cells 110 are stacked. Any one battery module 100a may be located on one surface of the first side surface part 1210, and another battery module 100a may be located on one surface of the second side surface part 1220. The first side surface part 1210 and the second side surface part 1220 of the cross beam 1200 may support the expansion force of the battery cells 110.

An opening 1200P is formed on at least one of the first side surface part 1210 or the second side surface part 1220. The opening 1200P may correspond to a shape in which one area of the frame portion 1200F is penetrated. The tube 1300 is exposed through the opening 1200P to contact one side surface of the battery module 100a, and can press the battery module 100a with a constant pressing force.

In particular, one surface of the first side surface part 1210 and one surface of the second side surface part 1220 are arranged parallel to both side surfaces of the battery module 100a in the direction in which the battery cells 110 are stacked, and the tube 1300 into which the fluid F flows may press the battery module 100a along the direction in which the battery cells 110 are stacked via the opening 1200P.

Through the above structure, the tube 1300 may apply a constant pressing force to the battery cells 110 using the pressure of the fluid F therein. By adjusting the pressure and amount of the fluid F flowing into the tube 1300, the pressure applied to the battery cell 110 can be maintained in an optimal state. Further, in the case of an all-solid-state battery or a pure Si battery, the performance of the battery cell is well exhibited when the initial pressing force is high. In order to increase the initial pressing force, a pressing means using a fluid can be used as in the present embodiment. In addition, even if the battery cell 110 expands along the stacking direction due to swelling, the fluid F in the tube 1300 may absorb expansion displacement of the battery cell 110.

Meanwhile, the battery pack 1000 according to the present embodiment may include a fluid supply device 1400 connected to the tube 1300 to supply the fluid to the tube 1300. Further, the battery pack 1000 may further include a fluid control valve 1500 that connects the tube 1300 and the fluid supply device 1400 and controls the amount of fluid F flowing into the tube 1300. Moreover, the battery pack 1000 may further include a pressure sensor 1600 that is connected to the tube 1300 to measure the pressure of the tube 1300.

As an example, the frame part 1200F of the cross beam 1200 may include a first side surface part 1210, a second side surface part 1220, and a ceiling part 1230, wherein the ceiling part 1230 may connect the upper side end of the first side part 1210 and the upper side end of the second side surface part 1220. That is, the first side surface part 1210, the second side surface part 1220, and the ceiling part 1230 may form an n-shape on the cross section of the frame part 1200F. The tube 1300 may be arranged in an n-shape correspondingly within the n-shaped frame part 1200F.

At this time, the position of the fluid control valve 1500 or the pressure sensor 1600 is not particularly limited, but may be located in the inner side space of the frame part 1200F forming the n-shape as described above. That is, the fluid control valve 1500 may be located in a space surrounded by the first side surface part 1210, the second side surface part 1220 and the ceiling part 1230. The pressure sensor 1600 may be similarly located in a space surrounded by the first side surface part 1210, the second side surface part 1220 and the ceiling part 1230. Since the space inside the frame part 1200F of the cross beam 1200 can be utilized as a space for arranging the fluid control valve 1500 or the pressure sensor 1600, the space utilization rate inside the pack housing 1100 can be increased.

Meanwhile, the fluid supply device 1400 according to the present embodiment may be a device that supplies fluid to the inside of the tube 1300 which is a device that utilizes a conventional fluid pump or pressure head.

The fluid supply device using the pressure head includes a fluid supply pipe connected to the tube 1300. At this time, the fluid supply pipe is located higher than the fluid supply area of the tube 1300 and has a structure formed to be perpendicular to the ground. Further, the height of the fluid inside the fluid supply pipe can be adjusted to determine the amount of the fluid F flowing into the tube 1300, thereby controlling the pressure of the tube 1300. In such a case, the fluid supply device may apply fluid pressure to the tube without the need for a separate power source.

Meanwhile, the fluid control valve 1500 according to the present embodiment may be a conventional valve, and is connected between the fluid supply device 1400 and the tube 1300, thereby capable of controlling the flow rate of the fluid F flowing into the tube 1300. Thereby, the surface pressure of the battery cell 110 can be maintained constant. For example, the fluid control valve 1500 is operated by receiving a signal from the pressure sensor 1600, and may open or close a flow path. Specifically, the fluid control valve 1500 can open a flow path to supply or discharge fluid F when the pressure in tube 1300 is greater than or less than the reference range, and it can close the flow path when the pressure in the tube 1300 falls within the reference value range.

In addition, the pressure sensor 1600 according to the present embodiment is connected to the tube 1300 and thus can measure the changing pressure of the tube 1300 into which the fluid F flows. Additionally, the pressure sensor 1600 may be connected to the fluid control valve 1500 to transfer pressure information of the tube 1300. Whether or not the fluid control valve 1500 operates is set on the basis of the measured pressure measured by the pressure sensor 1600.

By supplying the fluid F to the tube 1300, the pressure of the tube 1300 can be increased, and the initial pressure applied to the battery cell 110 can be reduced as desired. That is, the final assembly of the battery pack 1000 according to the present embodiment may be completed in a state in which fluid pressure is applied to the tube 1300 inside the cross beam 1200 to apply an appropriate pressing force to the battery cell 110.

Meanwhile, when swelling occurs in the battery cells 110 inside the battery module 100a, the pressure applied to the tube 1300 increases. In such a case, the fluid supply device 1400 and the fluid control valve 1500 may operate according to the pressure value of the tube 1300. That is, when the pressure of the tube 1300 exceeds a predetermined value, the fluid control valve 1500 is opened until the pressure inside the tube 1300 reaches the reference value, and the fluid supply device 1400 may discharge the fluid F inside the tube 1300 to the outside of the tube 1300. Thereby, the pressure can be lowered. Meanwhile, if the pressure of the tube 1300 is less than the predetermined value, the fluid control valve 1500 is opened, and the fluid supply device 1400 may supply fluid F into the tube 1300. That is, the battery pack 1000 according to the present disclosure can control the inflow amount of fluid inside the tube 1300 supporting the battery cell stack 120 on the basis of the pressure of the tube 1300 measured by the pressure sensor 1600. Thereby, the battery cell 110 can maintain a constant surface pressure.

Conventionally, the swelling of the battery cells 110 was controlled using compression pads arranged within the battery module, but in the present embodiment, since the amount of fluid in the tube 1300 inside the cross beam 1200 can be adjusted to thereby control the swelling of the battery cells 110, and absorb the expansion displacement, which can reduce the number of compression pads. The battery capacity is increased by the number of compression pads reduced, and the number of parts is reduced.

Further, in the conventional case, the initial pressure state may vary due to the tolerance of the battery cell 110 during accommodation of the battery module 100a, or the pressing force may vary under EOL (End of Life) conditions. However, in the present embodiment, the battery module 100a is arranged in the pack housing 1100, and even after assembly of the battery pack 1000 is completed, the amount of fluid can be controlled to adjust the pressure applied, whereby it is possible to prevent changes in the initial pressing state due to tolerance or changes in the pressing force in the EOL condition.

Further, in the process of disassembling the battery pack 1000, the fluid F inside the tube 1300 can be discharged to lower the pressure, so that the battery pack 1000 can be easily disassembled. Further, since the amount of the fluid F is adjusted on the basis of the pressure of the tube 1300, it is not necessary to consider swelling characteristics that vary for each battery module 100a, and it is not necessary to perform swelling characteristic tests for various conditions.

Meanwhile, the tube 1300 according to the present embodiment is provided inside the cross beam 1200, rather than being arranged inside an individual battery module. When the number of battery modules 100a mounted in the battery pack 1000 increases, the form of arranging the tubes for each individual battery module has a problem that the number of parts increases and the installation form becomes complicated. On the other hand, the tube 1300 according to the present embodiment is provided on the cross beam 1200 and can simultaneously control the swelling of the plurality of battery modules 100a. Since the tube 1300 inside the cross beam 1200 is configured to press each battery module 100a along the stacking direction of the battery cells 110, there is no problem in controlling all the swelling of each battery module 100a. Therefore, the present embodiment has the advantage of having fewer parts and a simpler installation form than when a tube is arranged in each individual battery module. Even so, there is no problem in maintaining the pressing force and surface pressure of the battery cells 110 constant and absorbing the expansion displacement.

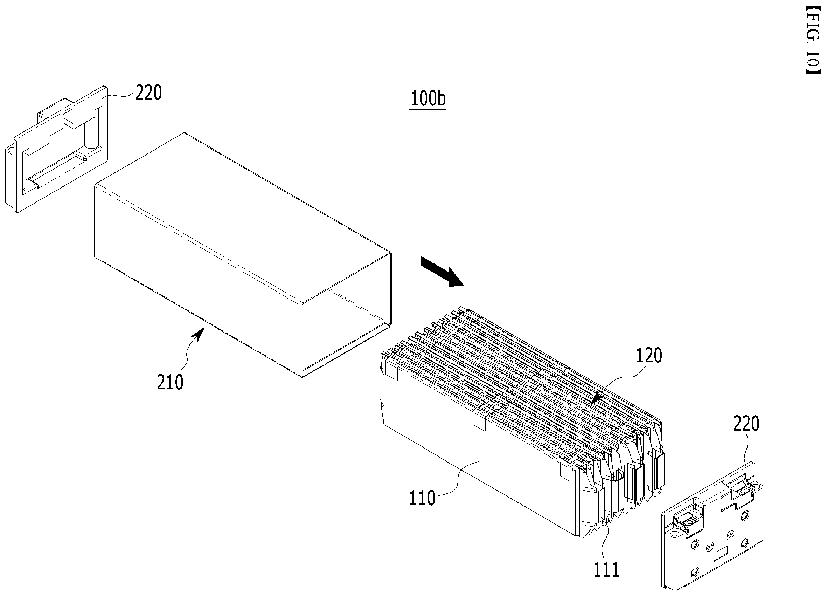

Meanwhile, FIG. 10 is an exploded perspective view showing a battery module according to another embodiment of the present disclosure.

Referring to FIG. 10, the battery module 100b according to another embodiment of the present disclosure may include a battery cell stack 120 in which battery cells 110 are stacked along one direction, a module frame 210 that accommodates the battery cell stack 120 therein, and end plates 220 located on both opened sides of the module frame 210.

As compared to the battery module 100a described above, the shape of the battery cell stack 120 is identical or similar to each other, but the difference is that the battery cell stack 120 is accommodated in the module frame 210.

The module frame 210 may be in the form of a mono frame in which the upper surface, the lower surface and both side surfaces are integrated, as shown. In another embodiment, a module frame having a form in which an upper cover is weld-joined to a U-shaped frame in which a lower surface and both side surfaces are integrated can also be used.

The module frame 210 has a form in which both opposing sides are opened, and the battery cell stack 120 is accommodated in this opened portion. After accommodation, the module frame 210 and the end plate 220 are coupled so that the end plate 220 covers the opened portion of the module frame 210.

Not only the battery module 100a described above, but also the battery module 100b of the present embodiment can be mounted in a pack housing together with a cross beam in which a tube is located to form a battery pack.

As the battery cells 110 repeat charge/discharge, the battery cells 110 swells and expands. In the case of this type of battery module 100b, the force applied to the module frame 210 gradually increases along with the expansion. Conventionally, in order to withstand this, it was necessary to set the thickness of the module frame 210 thick. However, in the case of the battery pack according to the present embodiment, the fluid can be used to keep the pressing force of the battery cells 110 constant and absorb the expansion displacement, so that the thickness of the module frame 210 can be set thin. Therefore, from the viewpoint of the entire battery pack including the battery module 100b, there is an advantage that the weight can be reduced and the battery capacity can be increased.

Further, conventionally, when the battery cell stack 120 is accommodated in the module frame 210, in order to apply an appropriate initial pressure to the battery cells 110, the accommodation was carried out while the left and right sides of the U-shaped frame described above are spread apart, or while a certain pressing force is applied to both side surfaces of the battery cell stack 120. However, in the case of the battery pack according to the present embodiment, after the battery modules 100b are arranged in the pack housing, the amount of fluid inside the tube 1300 can be adjusted to adjust the applied pressure, and thus, it is not necessary to accommodate the battery cell stack 120 inside the module frame 210 as in the conventional case. That is, after the battery cell stack 120 is conveniently accommodated inside the module frame 210 and the battery module 100b is arranged near the cross beam 1200, the initial pressing may be carried out in a manner of increasing the pressure of the tube 1300.

Meanwhile, referring to FIGS. 5 and 7 again, the battery pack 1000 according to the present embodiment may further include a vertical beam 1700 extending in a direction perpendicular to the extending direction of the cross beam 1200. When the number of battery modules arranged increases, an appropriate number of vertical beams 1700 may be arranged to support the battery modules and form a rigid structure.

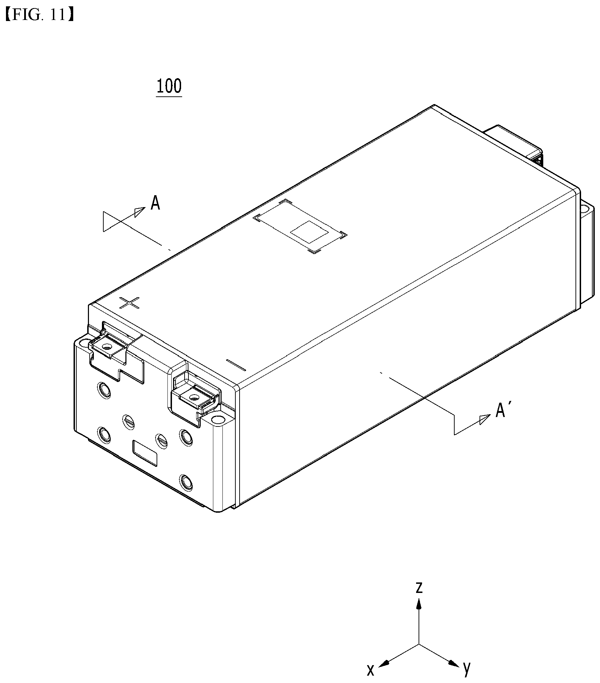

Next, a design method of the battery module according to the present embodiment will be described with reference to FIGS. 11 to 21.

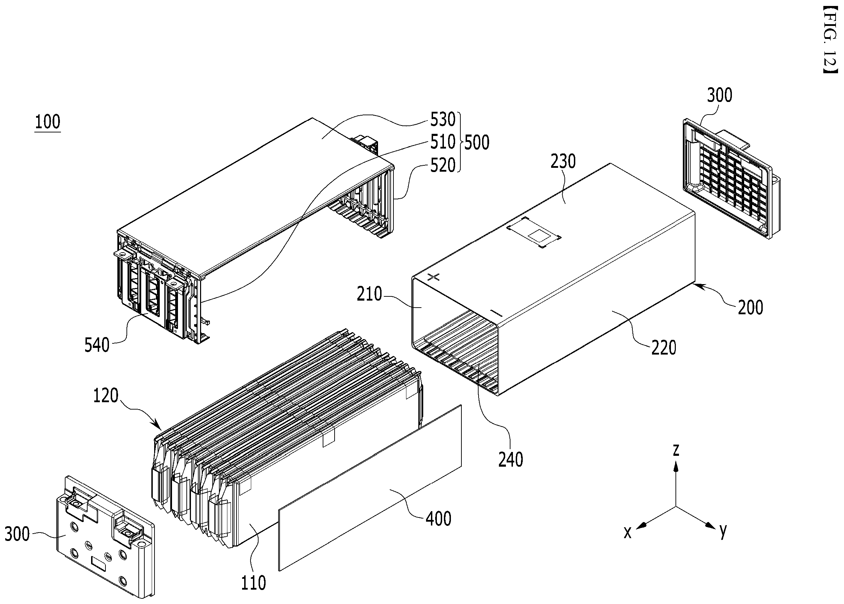

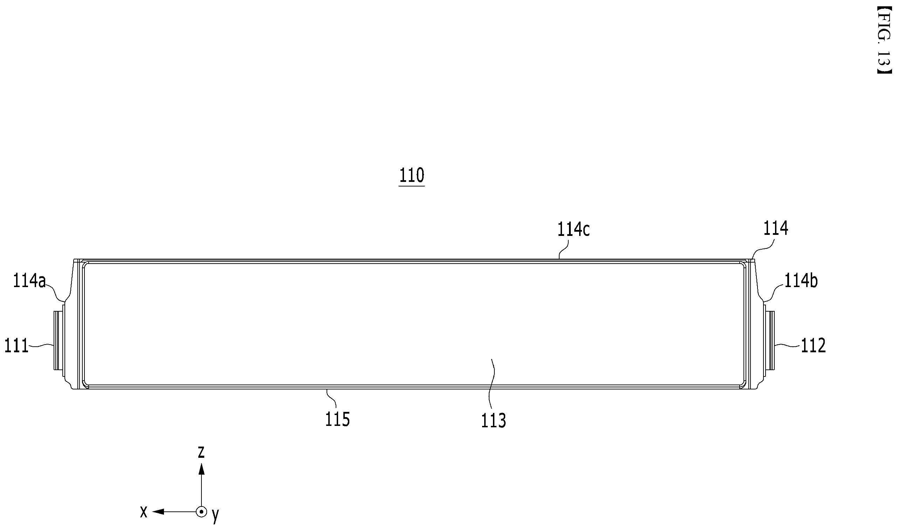

FIG. 11 is a perspective view of a battery module according to an embodiment of the present disclosure. FIG. 12 is an exploded perspective view of the battery module of FIG. 11. FIG. 13 is a plan view showing any one of the battery cells included in the battery module of FIG. 12.

Referring to FIGS. 11 to 13, the battery module 100 according to an embodiment of the present disclosure may include a battery cell stack 120 in which a plurality of battery cells 110 are stacked along one direction; and a module frame 200 that accommodates the battery cell stack 120 therein. Also, the battery module 100 may further include at least one compression pad 400.

First, the battery cell 110 may be a pouch-type battery cell. The pouch-type battery cell may be formed by accommodating an electrode assembly in a pouch case of a laminated sheet including a resin layer and a metal layer, and then joining the outer peripheral part of the pouch case. Such battery cells 110 may be formed in a rectangular sheet-like structure. Specifically, the battery cell 110 according to the present embodiment may have a structure in which two electrode leads 111 and 112 face each other and protrude from one end 114a and the other end 114b of the cell main body 113, respectively. The battery cell 110 can be produced by joining both ends 114a and 114b of a cell case 114 and one side part 114c connecting them in a state in which an electrode assembly (not shown) is accommodated in a cell case 114. In other words, the battery cell 110 according to one embodiment of the present disclosure has a total of three sealing parts, and the remaining other side part may be composed of a folding part 115. Between both ends 114a and 114b of the cell case 114 may be defined as the longitudinal direction of the battery cell 110, and between one side part 114c connecting both ends 114a and 114b of the cell case 114 and the folding part 115 may be defined as a width direction of the battery cell 110.

Meanwhile, only the battery cell 110 having a structure in which the electrode leads 111 and 112 protrude in both directions of one side and the other side has been described, but in another embodiment of the present disclosure, it goes without saying that a unidirectional pouch-type battery cell in which electrode leads protrude together in one direction can be used.

The battery cell 110 may be composed by a plurality of numbers, and the plurality of battery cells 110 may be stacked so as to be electrically connected to each other, thereby forming a battery cell stack 120. The cell case 114 is generally formed in a laminated structure of resin layer/metal thin film layer/resin layer. For example, when the surface of the battery case is formed of an O (oriented)-nylon layer, it tends to slide easily due to external impact when stacking a plurality of battery cells to form a medium- and large-sized battery module. Therefore, in order to prevent this problem and maintain a stable stacked structure of battery cells, an adhesive part can be provided on the surface of the battery case to form a battery cell stack 120. The adhesive part may be a self-adhesive adhesive such as a double-sided tape or a chemical adhesive bonded by a chemical reaction during adhesion. The adhesive part will be described later.

A plurality of battery cells 110 are stacked along one direction to form a battery cell stack 120, and the battery cells 110 having a rectangular sheet structure may be stacked along one direction while facing one surface of the battery body 113. More specifically, the battery cells 110 may be stacked to vertically configure so that the one surface of the battery cells 110 is parallel to the side surface parts 210 and 220 of the module frame 200, which will be described later. FIG. 12 shows a state in which battery cells 110 are stacked along a direction parallel to the y-axis to form a battery cell stack 120. Accordingly, in the battery cell stack 120, the electrode leads 111 and 112 may protrude toward the x-axis direction and the -x-axis direction.

The module frame 200 may be a frame having a form in which one side and the other side are opened. The battery cell stack 120 is inserted through the opened one side or other side of the module frame 200, so that the battery cell stack 120 can be accommodated in the inner space of the module frame 200.

The module frame 200 includes side surface parts 210 and 220 that respectively cover both side surfaces of the battery cell stack 120 along the stacking direction of the battery cells 110. In the battery cells 110 stacked along the y-axis direction, each of the side surface parts 210 and 220 of the module frame 200 can cover the side surfaces in the y-axis direction and the -y-axis direction of the battery cell stack 120.

Further, the module frame 200 may include an upper surface part 230 and a lower surface part 240 that connect the side surface parts 210 and 220. The upper surface part 230 and the lower surface part 240 of the module frame 200 may respectively cover the upper surface and the lower surface of the battery cell stack 120 accommodated inside the module frame 200.

Meanwhile, the module frame 200 shown in FIG. 12 may have a form in which the side surface parts 210 and 220, the upper surface part 230 and the lower surface part 240 are integrated, but in another embodiment of the present disclosure, the module frame may have a form in which a U-shaped frame and an upper cover are joined together. A U-shaped frame covering both side surfaces and lower surfaces of the battery cell stack and an upper cover covering the upper surface of the battery cell stack may be joined at corresponding corners to form a module frame.

The battery module 100 according to the present embodiment may include a busbar frame 500 accommodated in the module frame 200 together with the battery cell stack 120. The busbar frame 500 may include a front frame 510 and a rear frame 520 that are respectively located on one side and the other side of the battery cell stack 120 from which the electrode leads 111 and 112 protrude. Further, the busbar frame 500 may further include an upper frame 530 connected to each of the front frame 510 and the rear frame 520 and located at the upper part of the battery cell stack 120.

The busbars 540 for connecting the electrode leads 111 and 112 of the battery cells 110 included in the battery cell stack 120 may be mounted on the front frame 510 and the rear frame 520. Specifically, the electrode leads 111 and 112 of the battery cell 110 is bent after passing through slits formed in the front frame 510 and the rear frame 520, and can be joined to the busbar 540 by welding or the like. In this manner, the battery cells 110 included in the battery cell stack 120 may be electrically connected in series or parallel.

The battery module 100 according to the present embodiment may include end plates 300 located on both opened sides of the open module frame 200 facing each other. The end plates 300 may be provided so as to cover the opened one side and other side of the module frame 200. That is, the two end plates 300 may be located on both opened sides of the module frame 200 and joined at corresponding corners of the module frame 200 by welding or the like. The end plate 300 can physically protect the battery cell stack 120 and other electrical components from external impact.

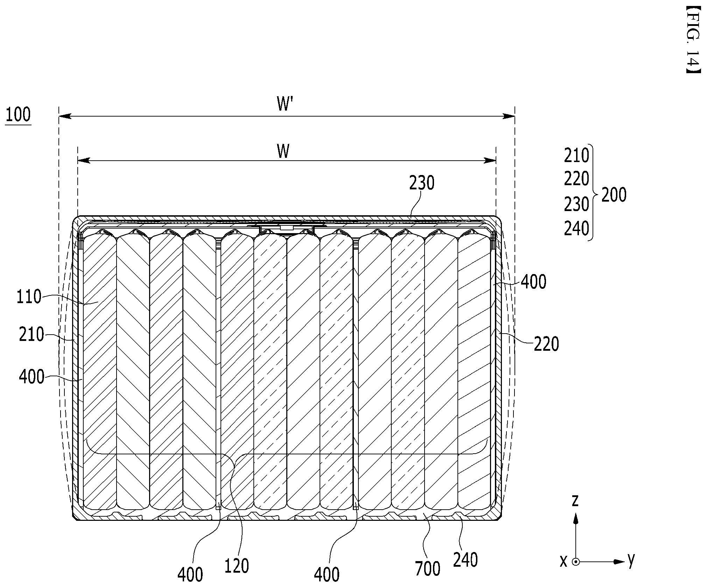

FIG. 14 is a cross-sectional view taken along the cutting line A-A' of FIG. 11.

Referring to FIGS. 12 to 14 together, the battery module 100 according to the present embodiment includes at least one compression pad 400 that is arranged at least at one place between adjacent battery cells 110 or between the outermost battery cell 110 and the side surface parts 210 and 220 among the battery cells 110.

The compression pad 400 is a foam-shaped member and can partially absorb the swelling of battery cells. Specifically, the battery cell 110 may generate gas inside due to deterioration or the like as charge/discharge is repeated. And, when gas is generated from the inside in this way, the internal pressure increases, which may cause a swelling phenomenon in which pressure resistance increases and at least a part of the exterior part swells. In particular, in the case of the pouch-type secondary batteries, the structural stiffness of the exterior part is weaker than that of the can-type secondary battery, so that the swelling phenomenon may occur more severely.

When a swelling phenomenon occurs in the secondary battery, the pressure inside the battery increases and the volume increases, which may adversely affect the structural stability of the battery module. Thus, by arranging a compression pad 400 that is compressed when pressure is applied to the inside of the battery module 100, an attempt was made to partially absorb the swelling of the battery cell 110. The material of the compression pad 400 is not particularly limited as long as it can be compressed to absorb the swelling of the battery cell 110, and may include polyurethane material as an example.

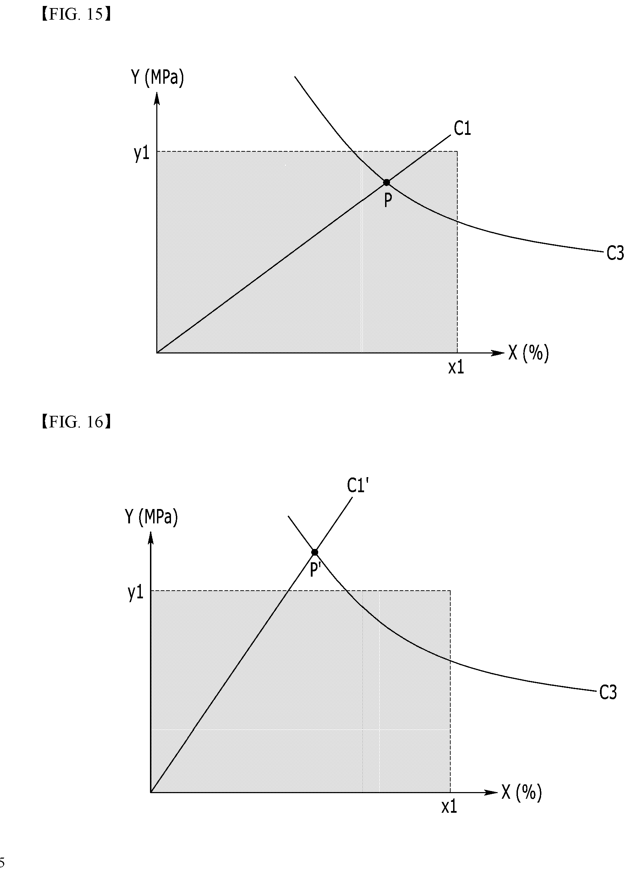

Next, a design method of the battery module according to the present embodiment will be described with reference to FIGS. 15 to 21.

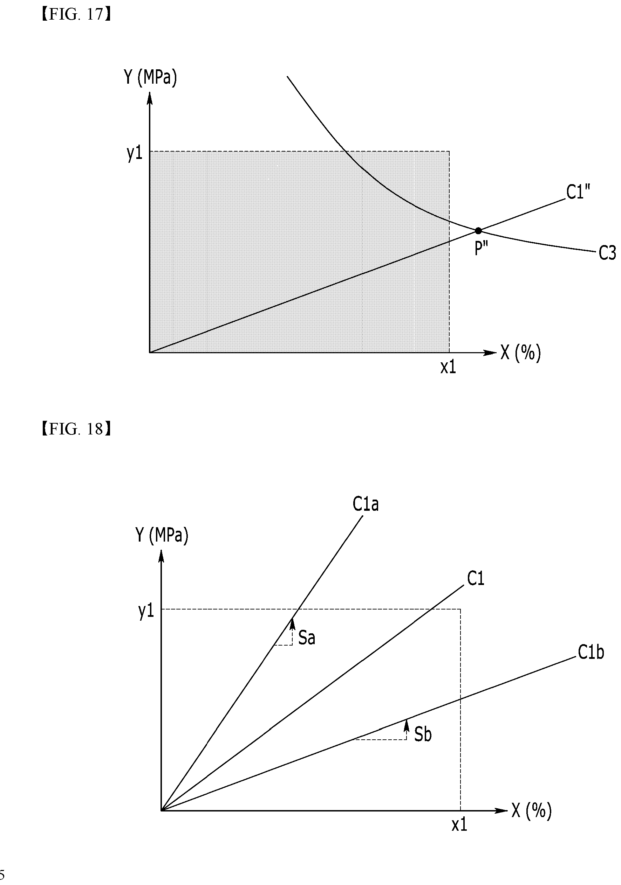

FIGS. 15 to 17 are graphs showing module stiffness curves of battery modules and P-D curves of battery cell stacks according to an embodiment of the present disclosure. FIG. 18 is a graph showing the range of a module stiffness curve of a battery module according to an embodiment of the present disclosure.

Referring to FIGS. 12, 14, and 15 to 18 together, in the battery module 100 according to an embodiment of the present disclosure, a battery cell stack 120 in which battery cells 110 are stacked may be accommodated in the module frame 200 as described above. Within the battery module, the battery cells 110 may be stacked along one direction from the side surface part 210 of the module frame 200 to the other side surface part 220. Further, a compression pad 400 may be interposed at least at one place between adjacent battery cells 110 or between the outermost battery cell 110 and the side surfaces 210 and 220 of the module frame 200 .

At this time, the module stiffness curve C1 caused by the module frame 200 and the P-D (pressure-displacement) curve C3 of the battery cell stack 120 showing the swelling characteristics of the battery cells 110 are calculated, respectively, and they are fitted into one graph. Then, the swelling behavior of the battery module can be predicted by a method of finding an equilibrium point (intersection point) between the two curves.

FIGS. 15 to 17 show intersections P, P' and P" between the module stiffness curves C1, C1' and C" and the P-D curve C3 of the battery cell stack. The P-D curve C3 of the battery cell stack is a graph showing the relationship between the surface pressure that the battery cell 110 receives according to the degree of change when the thickness of the battery cell 110 changes due to the swelling of the battery cell 110. The P-D curve C3 of the battery cell stack may be measured in an EOL (End of Life) state of the battery cells 110. Here, EOL refers to the state when the ratio of the current capacity of the battery to the initial capacity of the battery reaches a predetermined ratio, and the ratio may be 80%. In other words, EOL may refer to the battery state when the capacity of the battery reaches 80% of the initial value, and may correspond to a state in which the lifespan of the corresponding battery has expired or replacement is required. Meanwhile, the module stiffness curves C1, C1' and C" are graphs showing the relationship between the extent to which the width W of the module frame 200 changes according to the direction in which the battery cells 110 are stacked and the amount applied to the module frame 200. The direction in which the battery cells 110 are stacked corresponds to a direction from one side part 210 to the other side part 220 of the module frame 200, and the direction in which the battery cells 110 are stacked is hereinafter referred to as the width direction. Further, the widths W and W' of the module frame 200 means the distance from one side surface part 210 to the other side surface part 220. Each of the module stiffness curve C1 and the P-D curve C3 of the battery cell stack will be described in detail below.

In each of the module stiffness curves C1, C1' and C" and the P-D curve C3 of the battery cell stack, the X-axis corresponds to deformation ratio and the unit may be %. The Y-axis corresponds to the applied surface pressure and the unit may be MPa.

The intersection points P, P' and P" between the module stiffness curves C1, C1' and C" and the P-D curve C3 of the battery cell stack corresponds to the point where the behavior due to swelling of the battery cell stack 120 and the behavior due to deformation of the module frame 200 are balanced. In other words, in the case of a battery module in which a battery cell stack 120 exhibiting a specific P-D curve C3 in an EOL (End of Life) state is accommodated in a module frame 200 exhibiting a specific module stiffness curve C1, the corresponding battery module can be predicted to have deformation ratio and surface pressure corresponding to the intersection points P, P' and P" in the EOL state. That is, the battery module is deformed by the amount corresponding to the X-axis value of the intersection points P, P' and P" in the width direction in the EOL state, and the battery cells 110 and the module frame 200 receive surface pressure as much as the Y-axis value of the intersection points P, P' and P".

At this time, as shown in FIG. 15, the intersection point P is preferably located within the deformation limit point x1 and the pressure limit point y1. The deformation limit point x1 is 12%, and the pressure limit point y1 is 0.9 MPa. That is, it is preferable that the X-axis value of the intersection point P is 12% or less, which is the deformation limit point x1, and the Y-axis value of the corresponding intersection point P is 0.9 MPa or less, which is the pressure limit point y1. That is, the battery module according to the present embodiment may have the feature that in the EOL state, the deformation ratio in the direction in which the battery cells 110 are stacked is 12% or less, and the surface pressure applied to the battery cells 110 is 0.9 MPa or less.

As shown in FIG. 16, when the Y-axis value of the intersection point P' exceeds the pressure limit point y1, it is predicted that in the EOL state, the surface pressure exceeding the pressure limit point y1 is applied to the battery cells 110 and the module frame 200 of the corresponding battery module. When a pressure exceeding 0.9 MPa, which is the pressure limit point y1, is applied to the battery cells 110, a problem of degradation of life performance of the battery cells 110, such as sudden drop, may occur. Further, when a pressure exceeding 0.9 MPa, which is the pressure limit point y1, is applied to the module frame 200, a surface pressure exceeding the yield strength can be applied so that the module frame 200 can be damaged and deformed.

As shown in FIG. 17, when the X-axis value of the intersection point P" exceeds the deformation limit point x1, it is predicted that in the EOL state, the battery module will be deformed more than the deformation limit point x1 in the width direction. This means that the thickness change due to the expansion of the battery cells 110 is excessively allowed, which may cause problems such as disconnection between electrode leads and tabs in the battery cell 110 and cracks in the pouch-type battery case of the battery cell 110. In addition, since the battery module is predicted to be deformed more than the deformation limit point x1 of 12%, the space occupied by the battery module inside the battery pack is excessively increased, which causes the energy density of the battery module and the battery pack to decrease.

Meanwhile, referring to FIG. 18, in the case of the battery module according to the present embodiment, the module stiffness curve C1 can be calculated in a slope range of 0.00417 or more and 0.225 or less (MPa/%). That is, the module stiffness curve C1 of the battery module according to the present embodiment can be formed in the range between a lower limit module stiffness curve C1b having a slope Sb of 0.00417 MPa/% and an upper limit module stiffness curves C1a having a slope Sa of 0.225 MPa/%. In order for the intersection point (P) between the module stiffness curve C1 and the P-D curve C3 of the battery cell stack to be located within the range of the deformation limit point x1 and the pressure limit point y1, it is preferable that the module stiffness curve C1 is calculated in a slope (MPa/%) range of 0.00417 or more and 0.225 or less.

The module stiffness curve C1 will be specifically described below. As described above, the module stiffness curve C1 is a graph showing the relationship between the extent to which the width of the module frame 200 changes according to the direction in which the battery cells 110 are stacked and the load applied to the module frame 200. From the viewpoint of the module stiffness curve C1, the X axis corresponds to the deformation ratio % of the module frame 200 along the width direction. The deformation ratio may be calculated based on the width W' (see FIG. 14) of the module frame 200 deformed along the width direction, relative to the width W (see FIG. 14) of the module frame 200 before deformation. For example, the deformation ratio may be calculated as the ratio of the extent W'-W to which the width W (see FIG. 14) of the module frame 200 is deformed relative to the width of the module frame 200 before deformation. From the viewpoint of the module stiffness curve C1, the Y-axis may correspond to the surface pressure (MPa) applied to the side surfaces 210 and 220 of the module frame 200 according to the deformation ratio of the module frame 200.

In order to calculate the module stiffness curve C1, first, the frame stiffness curve may be calculated. The frame stiffness curve is a graph of the relationship between the deformation ratio of the module frame 200 and the surface pressure applied to the module frame 200. Such frame stiffness curves can be obtained through several actual tests or simulations. For example, an actual force is applied to the module frame 200 to measure the degree of deformation of the module frame 200 in the width direction. A frame stiffness curve can be derived by repeating the process while changing the applied force. A module stiffness curve C1 can be derived by considering the influence of the compression pad 400 on the frame stiffness curve. Specifically, the degree of compression of the compression pad 400 relative to the surface pressure applied to the compression pad 400 and the number of compression pads 400 can be reflected in the frame stiffness curve to finally derive the module stiffness curve C1.

Below, the P-D curve C3 of the battery cell stack will be described in detail. As described above, the P-D curve C3 of the battery cell stack is a graph showing the relationship of the surface pressure received by the battery cell 110 according to the degree of change when the thickness of the battery cell 110 changes due to swelling. From the viewpoint of the P-D curve C3 of the battery cell stack, the X axis may correspond to the deformation ratio (%) along the width direction of the battery cell stack 120, and the Y-axis may correspond to surface pressure (MPa) applied to the battery cells 110 included in the battery cell stack 120.

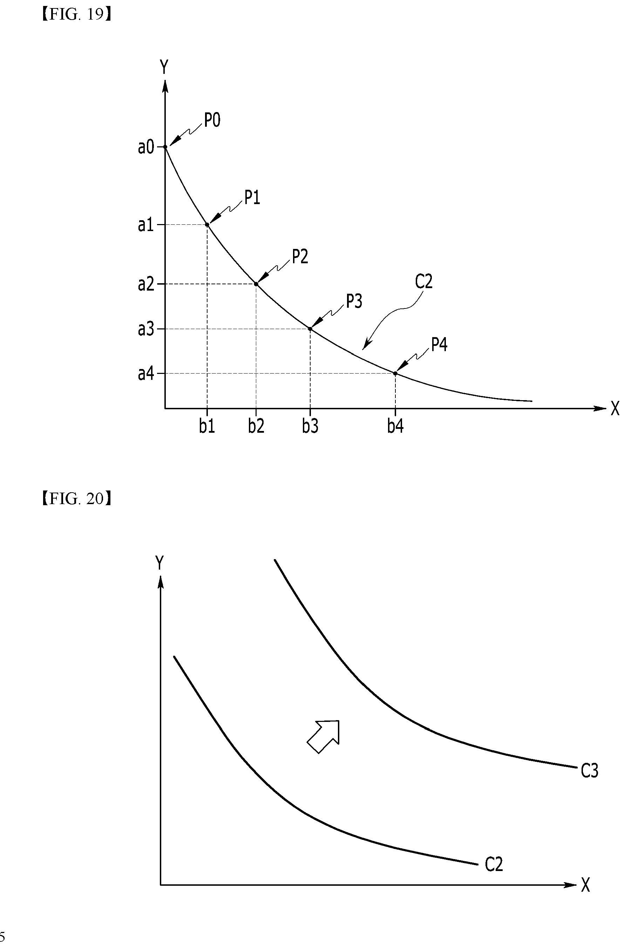

Next, the process of calculating the P-D curve C3 of the battery cell stack will be described in detail with reference to FIGS. 19 and 20.

FIG. 19 is a graph showing a P-D curve for a single battery cell.

Referring to FIG. 19, the thickness variation and surface pressure of a single battery cell 110 according to charge/discharge cycles may be measured. Specifically, a single battery cell 110 is located in a fixing jig in which thickness variation is limited, and then charge/discharge cycles are repeated. After that, the surface pressure value of a0 is measured through a load cell arranged in the corresponding fixing jig. The measured a0 is represented by P0 on the Y-axis. Next, a single battery cell 110 is located in a variable jig in which the thickness can be changed by a spring or the like, and then the charge/discharge cycles are repeated. Then, the surface pressure value of a1 is measured through the load cell arranged on the variable jig, and the increased thickness of the battery cell 110 is measured to calculate the thickness deformation ratio of b1. The corresponding a1 and b1 are denoted by point P1. The spring constant of the variable jig is changed and the measurement process is repeated to measure the surface pressure values of a2, a3, and a4 and the deformation ratio values of b2, b3, and b4, respectively. Based on such values, coordinate points P2, P3 and P4 can be displayed, and one curve C2 can be derived. And, the curve C2 thus derived corresponds to the P-D (pressure-displacement) curve of a single battery cell.

FIG. 20 is a graph showing a P-D curve of a single battery cell and a P-D curve of a battery cell stack.

Referring to FIGS. 19 and 20 together, the number of battery cells 110 included in the battery cell stack 120 can be reflected in the P-D curve C2 of a single battery cell obtained through the process described in FIG. 19 to obtain the P-D curve C3 of the battery cell stack 120. As the number of battery cells 110 increases, the surface pressure required according to the degree of deformation increases, so that the P-D curve C3 of the battery cell stack 120 is naturally located in the upper part compared to the P-D curve C2 of a single battery cell.

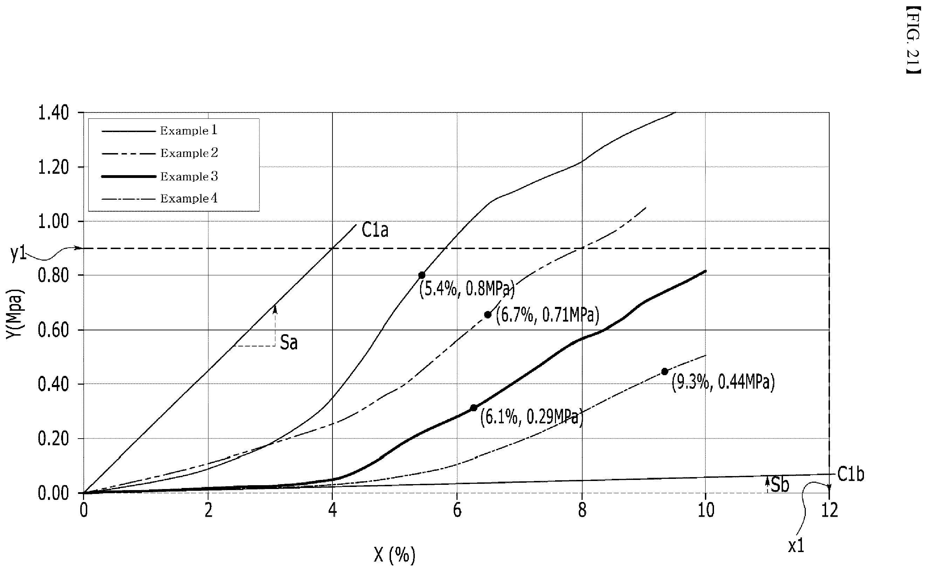

FIG. 21 is a graph showing module stiffness curves of Examples 1 to 4 according to the present disclosure.

Referring to FIG. 21, the module stiffness curves of each of Examples 1 to 4 are shown. The P-D curves of the battery cell stack are not shown, but the equilibrium point (intersection point) where each of the module stiffness curves of Examples 1 to 4 meets the P-D curve of each of the battery cell stacks of Examples 1 to 4 is displayed.

Looking at the swelling behavior of the battery module that is predicted according to the above method, it is predicted that in the EOL state, the battery module of Example 1 is deformed in the width direction by 5.4%, and the internal battery cells and module frame receive a surface pressure of 0.8 MPa. Moreover, it is predicted that in the EOL state, the battery module of Example 2 is deformed in the width direction by 6.7%, and the internal battery cells and module frame receive a surface pressure of 0.71 MPa. Further, it is predicted that in the EOL state, the battery module of Example 3 is deformed in the width direction by 6.1%, and the internal battery cells and module frame receive a surface pressure of 0.29 MPa. Finally, it is predicted that in the EOL state, the battery module of Example 4 is deformed in the width direction by 9.3%, and the internal battery cells and the module frame receive a surface pressure of 0.44 MPa.

All of the battery modules of Examples 1 to 4 exhibit the feature that in the EOL (End of Life) state, the deformation ratio in the direction in which the battery cells are stacked is 12% or less, and the surface pressure applied to the battery cells is 0.9 MPa or less. Further, the module stiffness curves of the battery modules of Examples 1 to 4 are calculated in the range of slope (MPa/%) of 0.00417 or more and 0.225 or less. That is, the module stiffness curves of the battery modules of Examples 1 to 4 may be formed in a range between the lower limit module stiffness curve C1b having a slope (Sb) value of 0.00417 MPa/% and the upper limit module stiffness curve C1a having a slope (Sa) value of 0.225 MPa/%.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery pack can be applied to various devices. For example, it can be applied to vehicle means such as an electric bike, an electric vehicle, and a hybrid electric vehicle, or an ESS (Energy Storage System) and may be applied to various devices capable of using a secondary battery, without being limited thereto.

### [Description of Reference Numerals]

100a, 100b: battery module
110: battery cell
120: battery cell stack
1000: battery pack
1100: pack housing
1200: cross beam
1300: tube

## Claims

1. A battery pack (1000) comprising:
a battery module (100, 100a, 100b) including a battery cell stack (120) in which a plurality of battery cells (110) are stacked in one direction;
a pack housing (1100) that accommodates the battery module (100, 100a, 100b) therein;
a cross beam (1200) arranged on the bottom (1100F) of the pack housing (1100); and
a tube (1300) arranged inside the cross beam (1200),
wherein the cross beam (1200) is located on one side surface of a stacking direction of the battery cells (110) with respect to the battery module (100, 100a, 100b), and has a form extending along a direction perpendicular to the stacking direction of the battery cells (110),
wherein the tube (1300) is configured to receive an inflow of a fluid (F),
wherein the tube (1300) into which the fluid (F) is introduced is configured to press the battery module (100, 100a, 100b) along the stacking direction of battery cells (220),
**characterized in that**
the cross beam (1200) comprises a frame part (1200F) including a first side surface part (1210), a second side surface part (1220), and a ceiling part (1230),
wherein an opening (1200P) is formed on at least one of the first side surface part (1210) or the second side surface part (1220), and
wherein the tube (1300) is exposed through the opening to make contact with the battery module (100, 100a, 100b).

2. The battery pack of claim, 1, wherein:
the battery cells (110) are stacked along one direction while standing vertically on one surface of the bottom (1100F) of the pack housing (1100) in the battery module (100, 100a, 100b).

3. The battery pack of claim 1, wherein:
the cross beam (1200) is arranged such that one surface of the first side surface part (1210) and one surface of the second side surface part (1220) are parallel to both side surfaces of the battery module (100, 100a, 100b) in a direction in which the battery cells (110) are stacked.

4. The battery pack of claim 1, further comprising:
a fluid supply device (1400) that is connected to the tube (1300) and supplies the fluid (F) to the tube (1300).

5. The battery pack of claim 4, further comprising:
a fluid control valve (1500) that connects the tube (1300) and the fluid supply device (1400) and controls the amount of the fluid (F) that flows into the tube (1300).

6. The battery pack of claim 5, further comprising:
a pressure sensor (1600) that is connected to the tube and measures the pressure of the tube (1300).

7. The battery pack of claim 5, wherein:
the cross beam (1200) comprises a frame part (1200F) including a first side surface part (1210), a second side surface part (1220), and a ceiling part (1230), and
the first side surface part (1210), the second side surface part (1220), and the ceiling part (1230) form an n-shape in a cross section of the frame part (1200F).

8. The battery pack of claim 7, wherein:
the fluid control valve (1500) is located in a space surrounded by the first side surface part (1210), the second side surface part (1220) and the ceiling part (1230).

9. The battery pack of claim 7, wherein:
the tube (1300) is arranged in an n-shape within the n-shaped frame part (1220F).

10. The battery pack of claim 1, wherein:
the tube (1300) is a soft or elastic material, and
the fluid (F) flowing into the tube (1300) is in a liquid or gel state.

11. The battery pack of claim 1, wherein:
the battery module (100, 100a, 100b) further comprises a module frame (200, 210) that accommodates the battery cell stack (120) therein,
the battery cells (110) are stacked along one direction from the side surface part (210, 220) of the module frame (200, 210) to the other side surface part (210, 220),
a compression pad (400) is interposed at least at one place between adjacent battery cells (110) or between the outermost battery cell (110) and the side surface part (210, 220) of the module frame (200, 210), and
in an EOL (End of Life) state, a deformation ratio (X) in the direction in which the battery cells (110) are stacked is 12% or less, and a surface pressure (Y) applied to the battery cells (110) is 0.9 MPa or less.

12. The battery pack of claim 11, wherein:
a module stiffness curve (C1, C1', C1", C1a, C1b) of the battery module (100, 100a, 100b) is calculated in a slope (Sa, Sb) (MPa/%) range of 0.00417 or more and 0.225 or less,
the module stiffness curve (C1, C1', C1", C1a, C1b) of the battery module (100, 100a, 100b) corresponds to a relationship between the deformation ratio (X) of the module frame (200, 210) and the surface pressure (Y) applied to the module frame (200, 210), and
the module stiffness curve (C1, C1', C1", C1a, C1b) of the battery module (100, 100a, 100b) is derived by reflecting the degree of compression of the compression pads (400) relative to the surface pressure (Y) applied to the compression pads (400) and the number of the compression pads (400), on the frame stiffness curve of the module frame (200, 210).

## Patentansprüche

1. Batteriepack (1000), aufweisend:
ein Batteriemodul (100, 100a, 100b), das einen Batteriezellenstapel (120) aufweist, in dem eine Vielzahl von Batteriezellen (110) in einer Richtung gestapelt sind;
ein Packgehäuse (1100), das das Batteriemodul (100, 100a, 100b) darin aufnimmt;
einen Querträger (1200), der auf dem Boden (1100F) des Packgehäuses (1100) angeordnet ist; und
ein Rohr (1300), das innerhalb des Querträgers (1200) angeordnet ist,
wobei sich der Querträger (1200) in Bezug auf das Batteriemodul (100, 100a, 100b) an einer Seitenfläche in der Stapelrichtung der Batteriezellen (110) befindet und eine Form aufweist, die sich entlang einer Richtung erstreckt, die senkrecht zur Stapelrichtung der Batteriezellen (110) ist,
wobei das Rohr (1300) konfiguriert ist, um einen Zufluss eines Fluids (F) aufzunehmen,
wobei das Rohr (1300), in das das Fluid (F) eingeleitet wird, konfiguriert ist, um das Batteriemodul (100, 100a, 100b) entlang der Stapelrichtung von Batteriezellen (220) zu drücken,
**dadurch gekennzeichnet, dass** der Querträger (1200) ein Rahmenteil (1200F) aufweist, das einen ersten Seitenflächenteil (1210), einen zweiten Seitenflächenteil (1220) und einen Deckenteil (1230) aufweist,
wobei eine Öffnung (1200P) an mindestens einem von dem ersten Seitenflächenteil (1210) und dem zweiten Seitenflächenteil (1220) ausgebildet ist, und
wobei das Rohr (1300) durch die Öffnung freiliegt, um mit dem Batteriemodul (100, 100a, 100b) in Kontakt zu kommen.

2. Batteriepack nach Anspruch 1, wobei:
die Batteriezellen (110) entlang einer Richtung gestapelt sind und dabei vertikal auf einer Oberfläche des Bodens (1100F) des Packgehäuses (1100) in dem Batteriemodul (100, 100a, 100b) stehen.

3. Batteriepack nach Anspruch 1, wobei:
der Querträger (1200) so angeordnet ist, dass eine Oberfläche des ersten Seitenflächenteils (1210) und eine Oberfläche des zweiten Seitenflächenteils (1220 in der Richtung, in der die Batteriezellen gestapelt sind, parallel zu den beiden Seitenflächen des Batteriemoduls (100, 100a, 100b) sind.

4. Batteriepack nach Anspruch 1, ferner aufweisend:
eine Fluidzuführvorrichtung (1400), die mit dem Rohr (1300) verbunden ist und dem Rohr (1300) das Fluid (F) zuführt.

5. Batteriepack nach Anspruch 4, ferner aufweisend:
ein Fluidsteuerventil (1500), das das Rohr (1300) und die Fluidzuführvorrichtung (1400) verbindet und die Menge des in das Rohr (1300) strömenden Fluids (F) steuert.

6. Batteriepack nach Anspruch 5, ferner aufweisend:
einen Drucksensor (1600), der mit dem Rohr verbunden ist und den Druck des Rohrs (1300) misst.

7. Batteriepack nach Anspruch 5, wobei:
der Querträger (1200) ein Rahmenteil (1200F) aufweist, das einen ersten Seitenflächenteil (1210), einen zweiten Seitenflächenteil (1220) und einen Deckenteil (1230) aufweist, und
der erste Seitenflächenteil (1210), der zweite Seitenflächenteil (1220) und der Deckenteil (1230) eine n-Form in einem Querschnitt des Rahmenteils (1200F) bilden.

8. Batteriepack nach Anspruch 7, wobei:
sich das Fluidsteuerventil (1500) in einem Raum befindet, der von dem ersten Seitenflächenteil (1210), dem zweiten Seitenflächenteil (1220) und dem Deckenteil (1230) umgeben ist.

9. Batteriepack nach Anspruch 7, wobei:
das Rohr (1300) n-förmig innerhalb des n-förmigen Rahmenteils (1220F) angeordnet ist.

10. Batteriepack nach Anspruch 1, wobei:
das Rohr (1300) aus einem weichen oder elastischen Material gebildet ist, und
sich das in das Rohr (1300) strömende Fluid (F) in einem flüssigen oder gelförmigen Zustand befindet.

11. Batteriepack nach Anspruch 1, wobei:
das Batteriemodul (100, 100a, 100b) ferner einen Modulrahmen (200, 210) aufweist, der den Batteriezellenstapel (120) darin aufnimmt,
die Batteriezellen (110) entlang einer Richtung von dem Seitenflächenteil (210, 220) des Modulrahmens (200, 210) zu dem anderen Seitenflächenteil (210, 220) gestapelt sind,
ein Kompressionspad (400) an mindestens einer Stelle zwischen benachbarten Batteriezellen (110) oder zwischen der äußersten Batteriezelle (110) und dem Seitenflächenteil (210, 220) des Modulrahmens (200, 210) eingefügt ist, und
in einem EOL-Zustand (End of Life) ein Verformungsverhältnis (X) in der Richtung, in der die Batteriezellen (110) gestapelt sind, 12 % oder weniger beträgt und ein auf den Modulrahmen (200, 210) ausgeübten Flächendruck (Y) 0,9 MPa oder weniger beträgt.

12. Batteriepack nach Anspruch 11, wobei:
eine Modulsteifigkeitskurve (C1, C1', C1", C1a, C1b) des Batteriemoduls (100, 100a, 100b) in einem Bereich der Steigung (Sa, Sb) (MPa/%) von 0,00417 oder mehr und 0,225 oder weniger berechnet wird,
die Modulsteifigkeitskurve (C1, C1', C1", C1a, C1b) des Batteriemoduls (100, 100a, 100b) einer Beziehung zwischen dem Verformungsverhältnis (X) des Modulrahmens (200, 210) und dem auf den Modulrahmen (200, 210) ausgeübten Flächendruck (Y) entspricht, und
die Modulsteifigkeitskurve (C1, C1', C1", C1a, C1b) des Batteriemoduls (100, 100a, 100b) abgeleitet wird, indem der Kompressionsgrad der Kompressionspads (400) in Bezug auf den auf die Kompressionspads (400) ausgeübten Flächendruck (Y) und die Anzahl der Kompressionspads (400) in der Rahmensteifigkeitskurve des Modulrahmens (200, 210) berücksichtigt werden.

## Revendications

1. Bloc-batterie (1000) comprenant :
un module de batterie (100, 100a, 100b) comprenant un empilement d'éléments de batterie (120) dans lequel une pluralité d'éléments de batterie (110) sont empilés dans une direction ;
un logement de bloc (1100) dans lequel est logé le module de batterie (100, 100a, 100b) ;
une traverse (1200) disposée sur le fond (1100F) de l'enveloppe du bloc (1100) ; et
un tube (1300) disposé à l'intérieur de la traverse (1200),
la traverse (1200) étant située sur une surface latérale d'une direction d'empilement des éléments de batterie (110) par rapport au module de batterie (100, 100a, 100b), et ayant une forme s'étendant le long d'une direction perpendiculaire à la direction d'empilement des éléments de batterie (110),
le tube (1300) étant configuré de façon à recevoir un afflux de fluide (F),
le tube (1300) dans lequel le fluide (F) est introduit étant configuré de façon à presser le module de batterie (100, 100a, 100b) le long de la direction d'empilement des éléments de batterie (220),
**caractérisé en ce que**
la traverse (1200) comporte une partie de cadre (1200F) comprenant une première partie de surface latérale (1210), une deuxième partie de surface latérale (1220), et une partie de plafond (1230),
une ouverture (1200P) étant formée sur au moins soit la première partie de surface latérale (1210), soit la deuxième partie de surface latérale (1220), et
le tube (1300) étant exposé à travers l'ouverture pour entrer en contact avec le module de batterie (100, 100a, 100b).

2. Bloc-batterie selon la revendication 1, dans lequel :
les éléments de batterie (110) sont empilés le long d'une direction tout en étant placés verticalement sur une surface du fond (1100F) du logement du bloc (1100) dans le module de batterie (100, 100a, 100b).

3. Bloc-batterie selon la revendication 1, dans lequel
la traverse (1200) est disposée de façon qu'une surface de la première partie de surface latérale (1210) et une surface de la deuxième partie de surface latérale (1220) soient parallèles aux deux surfaces latérales du module de batterie (100, 100a, 100b) dans une direction dans laquelle les éléments de batterie (110) sont empilés.

4. Bloc-batterie selon la revendication 1, comprenant en outre :
un dispositif d'alimentation de fluide (1400) qui est raccordé au tube (1300) et qui alimente le fluide (F) au tube (1300).

5. Bloc-batterie selon la revendication 4, comprenant en outre :
une vanne de régulation de fluide (1500) qui raccorde le tube (1300) et le dispositif d'alimentation de fluide (1400) et qui contrôle la quantité de fluide (F) qui s'écoule dans le tube (1300).

6. Bloc-batterie selon la revendication 5, comprenant en outre :
un capteur de pression (1600) qui est raccordé au tube et qui mesure la pression du tube (1300).

7. Bloc-batterie selon la revendication 5, dans lequel :
la traverse (1200) comporte une partie de cadre (1200F) comprenant une première partie de surface latérale (1210), une deuxième partie de surface latérale (1220), et une partie de plafond (1230), et
la première partie de surface latérale (1210), la deuxième partie de surface latérale (1220), et la partie de plafond (1230) forment une géométrie en N dans une section transversale de la partie de cadre (1200F).

8. Bloc-batterie selon la revendication 7, dans lequel
la vanne de régulation de fluide (1500) est située dans un espace entouré par la première partie de surface latérale (1210), la deuxième partie de surface latérale (1220) et la partie de plafond (1230).

9. Bloc-batterie selon la revendication 7, dans lequel
le tube (1300) est disposé dans une géométrie en N à l'intérieur de la partie de cadre à géométrie en N (1220F).

10. Bloc-batterie selon la revendication 1, dans lequel :
le tube (1300) est en un matériau souple ou élastique, et
le fluide (F) s'écoule dans le tube (1300) dans un état liquide ou de gel.

11. Bloc-batterie selon la revendication 1, dans lequel
le module de batterie (100, 100a, 100b) comporte en outre un cadre de module (200, 210) dans lequel est logé l'empilement d'éléments de batterie (120),
les éléments de batterie (110) sont empilés le long d'une direction depuis la partie de surface latérale (210, 220) du cadre du module (200, 210) jusqu'à l'autre partie de surface latérale (210, 220),
un coussinet de compression (400) est interposé au moins dans un endroit entre des éléments de batterie (110) adjacents ou entre l'élément de batterie (110) le plus à l'extérieur et la partie de surface latérale (210, 220) du cadre du module (200, 210), et
dans un état de fin de vie, un rapport de déformation (X) dans la direction dans laquelle les éléments de batterie (110) sont empilés est 12 % ou moins, et une pression de surface (Y) appliquée sur les éléments de batterie (110) est 0,9 MPa ou moins.

12. Bloc-batterie selon la revendication 11, dans lequel
une courbe de rigidité de module (C1, C1', C1", C1a, C1b) du module de batterie (100, 100a, 100b) est calculé dans une plage de pente (Sa, Sb) (MPa/%) de 0,00417 ou plus et 0,225 ou moins,
la courbe de rigidité de module (C1, C1', C1", C1a, C1b) du module de batterie (100, 100a, 100b) correspond à une relation entre le rapport de déformation (X) du cadre du module (200, 210) et la surface de pression (Y) appliquée sur le cadre du module (200, 210), et
la courbe de rigidité de module (C1, C1', C1", C1a, C1b) du module de batterie (100, 100a, 100b) est obtenue en réfléchissant le degré de compression des coussinets de compression (400) par rapport à la surface de pression (Y) appliquée sur les coussinets de compression (400) et le nombre des coussinets de compression (400), sur la courbe de rigidité de cadre du cadre du module (200, 210).
